(19) Europäisches Patentamt
European Patent Office
Office européen des brevets

(11) **EP 3 899 814 B1**

(12) **FASCICULE DE BREVET EUROPEEN**

(45) Date de publication et mention de la délivrance du brevet:
**31.01.2024 Bulletin 2024/05**

(21) Numéro de dépôt: **19823913.9**

(22) Date de dépôt: **17.12.2019**

(51) Classification Internationale des Brevets (IPC):
**G06N 10/40** *(2022.01)* **G01J 1/42** *(2006.01)*
**H04B 10/70** *(2013.01)*

(52) Classification Coopérative des Brevets (CPC):
**G01J 1/42; G06N 10/40; H04B 10/70;**
G01J 2001/442

(86) Numéro de dépôt international:
**PCT/EP2019/085695**

(87) Numéro de publication internationale:
**WO 2020/127299 (25.06.2020 Gazette 2020/26)**

(54) **DISPOSITIF ET PROCEDE DE DETECTION DE PHOTONS MICRO-ONDE UNIQUES**

VORRICHTUNG UND VERFAHREN ZUR DETEKTION VON EINZELMIKROWELLEN-PHOTONEN

DEVICE AND METHOD FOR DETECTING SINGLE MICROWAVE PHOTONS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2018 FR 1873288**

(43) Date de publication de la demande:
**27.10.2021 Bulletin 2021/43**

(73) Titulaires:
• **Centre national de la recherche scientifique**
**75016 Paris (FR)**
• **SORBONNE UNIVERSITE**
**75006 Paris (FR)**
• **College de France**
**75005 Paris (FR)**
• **École Normale Supérieure**
**75005 Paris (FR)**

(72) Inventeurs:
• **LESCANNE, Raphaël**
**94270 LE KREMELIN-BICETRE (FR)**
• **DELEGLISE, Samuel**
**75020 PARIS (FR)**
• **FLURIN, Emmanuel**
**75010 PARIS (FR)**
• **LEGHTAS, Zaki**
**75011 PARIS (FR)**

(74) Mandataire: **IPAZ**
**Bâtiment Platon**
**Parc Les Algorithmes**
**91190 Saint-Aubin (FR)**

(56) Documents cités:
• **Leghtas et al: "Confining the state of light to a quantum manifold by engineered two-photon loss", arXiv:1412.4633v1, 15 décembre 2014 (2014-12-15), XP080784059, Extrait de l'Internet: URL:https://arxiv.org/abs/1412.4633v1 [extrait le 2019-11-03]**
• **J.-C. Besse et al: "Single-shot quantum non-demolition detection of itinerant microwave photons", arXiv:1711.11569v1, 30 novembre 2017 (2017-11-30), XP081298741, Extrait de l'Internet: URL:https://arxiv.org/abs/1711.11569v1 [extrait le 2019-11-03]**
• **P. Krantz et al: "Single-shot readout of a superconducting qubit using a Josephson parametric oscillator", arXiv:1508.02886v2, 17 février 2016 (2016-02-17), XP055640820, Extrait de l'Internet: URL:https://arxiv.org/abs/1508.02886v2 [extrait le 2019-11-03]**
• **E. A. Sete et al: "Quantum theory of a bandpass Purcell filter for qubit readout", arXiv:1504.06030v2, 22 juillet 2015 (2015-07-22), XP055640821, Extrait de l'Internet: URL:https://arxiv.org/abs/1504.06030v2 [extrait le 2019-11-03]**

EP 3 899 814 B1

**Description**

**Domaine technique**

La présente invention concerne un dispositif permettant de détecter des photons micro-onde uniques, et un procédé de détection de photons micro-onde uniques mis en oeuvre par ce dispositif.

Le domaine de l'invention comprend celui des dispositifs électroniques supraconducteurs.

**Etat de la technique**

La granularité de la radiation électromagnétique est une des manifestations de la physique quantique. La détection de photons uniques permet de discriminer instantanément la présence d'une excitation électromagnétique de l'état de vide quantique sans avoir besoin de moyenner les fluctuations du champ associées à chacun de ces états. Une telle détection instantanée de l'énergie électromagnétique permet de sonder efficacement des signaux extrêmement faibles comme le rayonnement primordial généré par des phénomènes astrophysiques tels que le *big bang,* ou encore celui produit par la désintégration de nouvelles particules, dont l'existence pourrait permettre de résoudre l'énigme de la matière noire. Enfin, comme toute mesure sur un système quantique, une telle détection modifie fondamentalement le système mesuré. En l'occurrence, elle projette le champ dans un état d'énergie parfaitement déterminée. Ainsi, les détecteurs de photons uniques sont un composant essentiel en optique quantique.

Dans les domaines optiques et infrarouges (bandes de fréquence d'environ 400-800 THz et 300 GHz-400 THz, respectivement), il existe des détecteurs de photons uniques très performants. Ils sont notamment utilisés pour des expériences d'optique quantique, par exemple pour préparer des états non classiques, pour générer de l'intrication, ou encore, pour produire des clés cryptographiques partagées à distance. Ces détecteurs trouvent également une application dans l'imagerie et la communication telle que la cryptographie quantique longue distance. Dans ces exemples, la préparation d'un état quantique désiré est conditionnée par la détection d'un photon itinérant unique.

Les détecteurs de photons uniques sont caractérisés par plusieurs grandeurs. Leur efficacité de détection correspond à la probabilité d'avoir un signal de détection lorsqu'un photon arrive sur le détecteur. Leur bruit d'obscurité rend compte de la probabilité d'avoir un signal de détection alors qu'aucun photon n'est arrivé sur le détecteur. Enfin, le temps mort ou temps de réarmement est la durée que l'on doit attendre après une détection avant que le détecteur ne soit à nouveau prêt à faire une détection.

Dans les domaines optiques et infrarouge, les détecteurs de photons uniques se caractérisent par des efficacités de détection très élevées (proches de l'unité), de faibles bruits d'obscurité et des modes d'opération quasicontinus.

Dans le domaine micro-onde (bande de fréquence d'environ 1-20 GHz), les photons sont très difficiles à détecter à cause de leur très faible énergie. Il n'existe pas de détecteur de photons uniques commercialisés. Cette bande de fréquence nécessite de travailler en environnement cryogénique (~10mK) pour que le bruit thermique soit bien en dessous de l'énergie d'un photon.

Des démonstrations de principe ont été proposées, basées notamment sur la conversion du photon incident à détecter en une excitation d'un système quantique à deux niveaux énergétiques (par exemple un quantum bit, ou *qubit*) dont on peut mesurer l'état. La détection a eu lieu si l'on trouve le système à deux niveaux dans son état excité. Néanmoins, en mécanique quantique, le processus inverse, à savoir la désexcitation du système à deux niveaux en un photon propageant, se produit également. Ceci rendant la détection difficile, principalement deux parades ont été proposées.

Premièrement, l'intensité du processus de conversion peut être modulée pour capturer le photon et le piéger sous la forme d'une excitation du qubit. Cette méthode a pour inconvénient qu'il faut connaître précisément la forme temporelle du photon et son instant d'arrivée pour pouvoir le capturer, ce qui rend le détecteur inadapté dans beaucoup des applications.

Deuxièmement, l'état du qubit peut être mesuré en permanence. Cependant, ceci a tendance à faire baisser l'efficacité de détection et augmenter le bruit d'obscurité.

D'autres architectures ont été proposées, basées sur l'interférométrie de Ramsey. La parité du nombre de photon du paquet d'onde propageant est mesurée. Il y a un signal de détection si un photon unique arrive; en revanche, s'il y a deux photons incidents il n'y pas de détection. Ceci n'est pas un problème dans le cas du photon unique mais tend à majorer l'efficacité du détecteur à 50% pour un petit nombre de photons incidents et peut être limitant pour certaines applications. De plus, le bruit d'obscurité croit intrinsèquement avec la longueur de la fenêtre de détection, jusqu'à atteindre une probabilité de 50% pour des durées dépassant le temps de vie du qubit. Ceci limite en pratique la durée maximale durant laquelle le détecteur est « actif », ou « ouvert », et compromet sa capacité à détecter des photons d'extension temporelle importante. Enfin, la mesure interférométrique étant nécessairement délimitée dans le temps par une étape de préparation du qubit dans un état de superposition au début et par une étape de mesure dans cette même base à la fin, ce procédé ne peut pas être utilisé lorsque la source émet des photons à des instants parfaitement aléatoires.

L'invention a pour objectif de résoudre les problèmes décrits ci-dessus.

En 2014, Leghtas et al. (Confining the state of light to a quantum manifold by engineered two-photon loss ; arXiv:1412.4633v1 ; DOI : 10.48550/arXiv.1412.4633) décrivirent un résonateur micro-onde supraconducteur dont le couplage à un bain froid est dominé par l'échange de paires de photons.

En 2017, Besse et al. (Single-shot quantum non-demolition détection of itinérant microwave photons ; arXiv:1711.11569v1 ; DOI : 10.48550/arXiv.1711.11569) décrivirent un détecteur quantique non-destructif propageant des photons micro-ondes.

## Exposé de l'invention

Un but de la présente invention est de proposer un procédé et un système de détection de photons micro-onde uniques ayant un faible bruit d'obscurité et une efficacité élevée.

La présente invention a également pour objectif de proposer un procédé et un système de détection de photons micro-onde uniques insensible à l'instant d'arrivé ou la forme temporelle du photon incident, tant que ce dernier est dans la bande passant du détecteur.

Un autre but de la présente invention est de proposer un procédé et un dispositif de détection de photons micro-onde uniques pouvant opérer avec un temps mort court.

Au moins un de ces objectifs est atteint avec un dispositif de détection supraconducteur d'un photon micro-onde unique, le dispositif comprenant :

- un bit quantique supraconducteur à deux niveaux énergétiques dont l'état fondamental et un état excité sont contrôlables et détectables, la transition entre les états fondamental et excité ayant une fréquence angulaire $\omega_q$ ;
- un résonateur tampon agencé pour recevoir un photon micro-onde unique incident et ayant une fréquence angulaire $\omega_b$ ;
- un résonateur auxiliaire fortement dissipatif agencé pour évacuer un photon à un taux $\kappa_w$ et ayant une fréquence angulaire $\omega_w$ ; et
- des moyens de lecture agencés pour détecter l'état du bit quantique supraconducteur ;

dans lequel le résonateur tampon et le résonateur auxiliaire sont des résonateurs micro-onde supraconducteurs et couplés au bit quantique supraconducteur,
le bit quantique supraconducteur étant adapté pour permettre une interaction modulable à trois ondes entre le résonateur tampon, le résonateur auxiliaire (et le bit quantique supraconducteur ; et
dans lequel l'état excité du bit quantique supraconducteur et le photon du résonateur auxiliaire sont créés avec un taux $\Gamma$, de sorte que $\Gamma < \kappa_w$, en réponse à la réception du photon incident dans le résonateur tampon et à l'application d'un pompage paramétrique au bit quantique supraconducteur, au résonateur tampon ou au résonateur auxiliaire, le pompage paramétrique étant réalisé au moyen d'un champ micro-onde ayant une fréquence angulaire $\omega_p = \omega_q + \omega_w - \omega_b$.

Dans le dispositif, ou détecteur, selon l'invention, la fréquence du photon incident peut être comprise entre 1 et 20 GHz.

Selon un mode de réalisation avantageux, le bit quantique supraconducteur peut comprendre un résonateur non-linéaire.

Selon un exemple, le bit quantique supraconducteur est de type transmon.

De manière avantageuse, les résonateurs peuvent être respectivement couplés au bit quantique supraconducteur de manière capacitive.

De manière alternative, les résonateurs peuvent également être couplés au bit quantique supraconducteur de manière inductive.

Selon des exemples de réalisation, les moyens de lecture peuvent comprendre un résonateur micro-onde supraconducteur. Celui-ci peut alors correspondre à l'un des résonateurs suivants :

- le résonateur auxiliaire ;
- un résonateur de lecture supplémentaire.

Selon un mode de réalisation, le dispositif selon l'invention peut comprendre en outre des moyens d'accord de fréquence du résonateur tampon. Ainsi, dans le cas d'une bande passante limitée du détecteur, celui-ci peut être accordé sur une plage de quelques GHz pour recevoir des photons de fréquences différentes.

Selon un exemple, les moyens d'accord de fréquence peuvent comprendre un SQUID (abréviation pour le terme anglais « *Superconducting QUantum Interférence Device* ») intégré au résonateur tampon pour accorder la fréquence.

Selon un mode de réalisation, le dispositif selon l'invention peut comprendre en outre des moyens de filtrage pour le résonateur auxiliaire.

Selon un exemple, les moyens de filtrage peuvent comprendre un filtre Purcell.

Selon un autre aspect de la même invention, il est proposé un procédé de détection de photons micro-onde uniques, mis en oeuvre au moyen d'un dispositif de détection supraconducteur selon l'invention. L'invention, c'est-à-dire l'une quelconque des revendications 1 à 11. Le procédé comprend les étapes suivantes :

- réception d'un photon micro-onde unique incident (2) dans le résonateur tampon ;
- conversion du photon incident en une excitation du bit quantique supraconducteur et un photon dans le résonateur auxiliaire en réponse à la réception du photon incident dans le résonateur tampon et à l'application d'un pompage paramétrique au bit quantique supraconducteur, et au résonateur tampon ou au résonateur auxiliaire, le pompage paramétrique étant réalisé au moyen d'un champ micro-onde ayant une fréquence angulaire $\omega_p = \omega_q + \omega_w - \omega_b$ ; et
- lecture de l'état du bit quantique supraconducteur.

Le résonateur tampon, le résonateur auxiliaire et les moyens de lecture sont couplés au bit quantique supraconducteur.

Si un photon incident est dans la bande passante du résonateur tampon, il peut entrer dans ce dernier. Alors, la modulation de l'interaction à trois ondes par le pompage paramétrique permet de convertir le photon du résonateur tampon en une excitation du bit quantique et un photon du résonateur auxiliaire. La fréquence de modulation est choisie pour rendre ce processus de conversion résonant. Le photon du résonateur auxiliaire est ensuite dissipé rapidement si bien que le processus inverse, décrit comme une limitation précédemment, devient interdit. Il suffit alors de lire l'état du bit quantique pour obtenir un signal de détection. S'il y avait un photon incident, le bit quantique se trouvera dans l'état excité, sinon il sera dans son état fondamental. Les propriétés de cohérence du bit quantique n'affectent pas le bruit d'obscurité du détecteur.

Dans le cadre de la présente invention, l'application du pompage paramétrique au dispositif signifie que le pompage paramétrique peut être appliqué au bit quantique, au résonateur tampon ou au résonateur auxiliaire.

Selon un mode de réalisation, l'étape de lecture peut être réalisée par l'envoi d'une impulsion micro-onde sur un résonateur de lecture. Si le résonateur de lecture a une fréquence différente de celle du bit quantique supraconducteur, il permet de faire une lecture dispersive du bit quantique supraconducteur.

Selon un mode de réalisation, le résonateur auxiliaire peut servir de résonateur de lecture.

Selon une variante, un résonateur de lecture supplémentaire peut être couplé au bit quantique supraconducteur. De manière avantageuse, lorsqu'un résonateur de lecture supplémentaire est compris dans le dispositif selon l'invention, le pompage paramétrique et la lecture du bit quantique supraconducteur peuvent être effectués simultanément, ce qui permet de s'affranchir de l'inefficacité liée au temps de cohérence du bit quantique supraconducteur. Il est ainsi possible d'obtenir un détecteur capable d'opérer en régime continu.

De manière particulièrement avantageuse, le procédé selon l'invention peut en outre comprendre une étape de réinitialisation du bit quantique supraconducteur réalisée par l'application simultanée du pompage paramétrique et d'une impulsion de réinitialisation sur le résonateur auxiliaire.

En effet, après une détection, le bit quantique supraconducteur est laissé dans son état excité. Or, pour que le détecteur puisse faire une nouvelle détection, il faut au préalable que le bit quantique supraconducteur soit dans son état fondamental, ce qui implique un temps d'attente pour que le bit quantique supraconducteur ait relaxé depuis la dernière détection. Cette étape de réinitialisation active permet de diminuer le temps d'attente et donc de considérablement réduire temps mort du détecteur.

Le dispositif et le procédé peuvent chacun être utilisés dans des applications de métrologie, de cryptographie, de l'imagerie nanoscopique médicale ou de calcul quantique. Le dispositif peut également être appliqué dans la radioastronomie, notamment pour servir de détecteur ultra-sensible dans les radiotélescopes ou les détecteurs de matière noire.

**Description des dessins**

D'autres avantages et caractéristiques apparaitront à l'examen de la description détaillée d'exemples nullement limitatifs, et des dessins annexés sur lesquels :

- la Figure 1 est une représentation schématique d'un exemple de réalisation non limitatif d'un procédé selon l'invention ;
- la Figure 2 est une représentation schématique d'un exemple de réalisation non limitatif d'un dispositif selon l'invention ;

- la Figure 3 est une représentation schématique d'un autre exemple de réalisation non limitatif d'un dispositif selon l'invention.

**Description détaillée de l'invention**

La porté de protection est définie par les revendications.

Sur les figures, les éléments communs à plusieurs figures conservent la même référence.

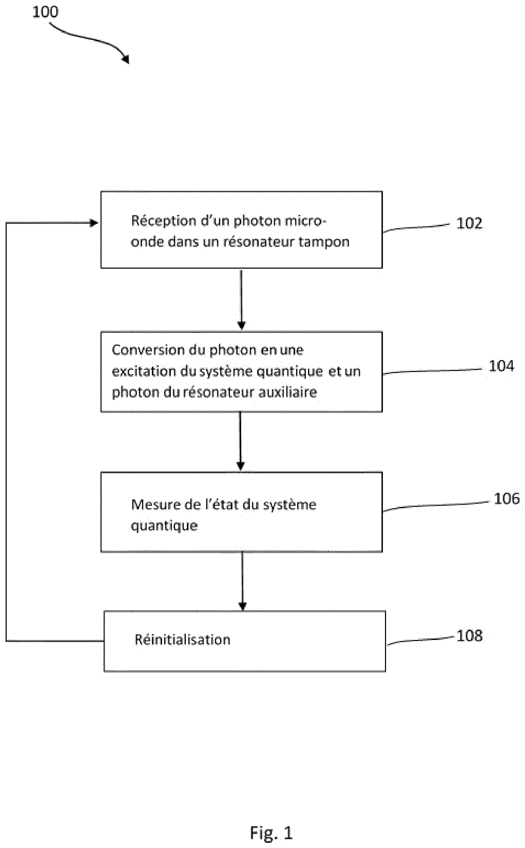

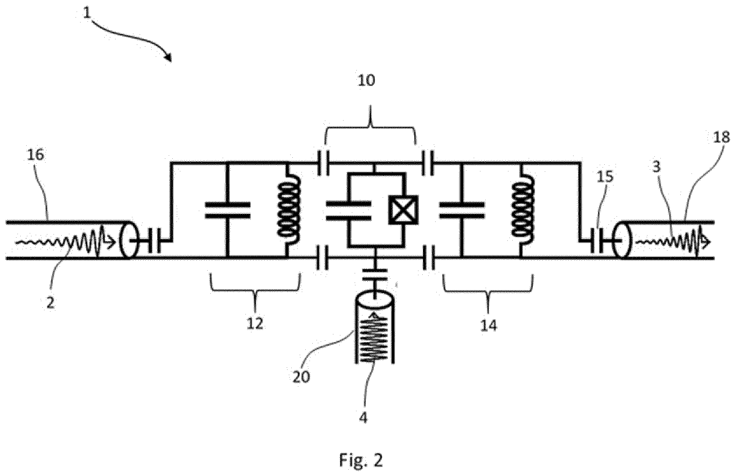

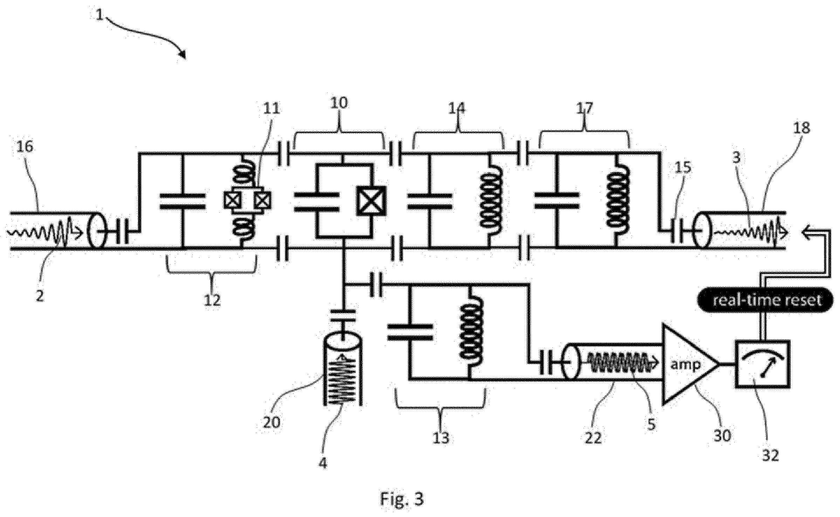

La Figure 1 est une représentation schématique d'un exemple de réalisation non limitatif d'un procédé selon l'invention. Le procédé 100 est mis en oeuvre au moyen d'un dispositif selon les modes de réalisation qui seront décrits ci-dessous en référence aux Figures 2 et 3.

Le dispositif 1, représenté sur la Figure 2, comprend un premier résonateur 12, dit tampon, et à un deuxième résonateur 14, dit auxiliaire. Ces résonateurs sont des résonateurs micro-onde supraconducteurs et sont représentés par un condensateur agencé en parallèle avec une inductance. Les résonateurs 12, 14 peuvent chacun être couplés à des lignes de transmission 16, 18 de photons. Le résonateur auxiliaire 14 est fortement dissipatif.

Les deux résonateurs 12, 14 sont couplés capacitivement à un qubit supraconducteur 10 représenté par un condensateur agencé en parallèle avec une jonction Josephson. On peut isoler deux états énergétiques du qubit 10, l'état fondamental et un état excité que l'on peut contrôler et détecter.

Le procédé 100, représenté sur la Figure 1, comprend une étape 102 de réception d'un photon micro-onde unique dans un résonateur supraconducteur. Ce processus peut être représenté par l'opérateur de création $b^+$ d'un photon dans le résonateur tampon, $b$ représentant l'opérateur de destruction. La réception du photon se fait avec un taux $\kappa_b$. Le résonateur tampon ayant une fréquence $\omega_b/2\pi$, un photon pourra être détecté s'il est dans la bande de fréquence $(\omega_b \pm \kappa_b/2)/2\pi$.

En parallèle, grâce à une étape 104 de conversion, le photon recueilli dans le résonateur tampon est converti avec un taux $\Gamma$ en deux excitations : une excitation du qubit et un photon du résonateur auxiliaire. Les deux niveaux du qubit sont séparés en énergie d'une quantité $\hbar\omega_q$, où $\hbar$ est la constante de Planck réduite et $\omega_q/2\pi$ est la fréquence du qubit associée à l'état excité. Le résonateur auxiliaire a une fréquence $\omega_w/2\pi$ et un taux de dissipation $\kappa_w$. On note les opérateurs d'excitation et de désexcitation du qubit respectivement $q^+$ et $q$. Les opérateurs de création et d'annihilation d'un photon du résonateur auxiliaire sont notés $w^+$ et $w$. Cette conversion est rendue possible car le qubit apporte un Hamiltonien d'interaction de la forme suivante :

[Math. 1]

$$\hat{H}_{\mathrm{int}} = \hbar\varepsilon(t)\big(bq^{\dagger}w^{\dagger} + b^{\dagger}qw\big)$$

où $\varepsilon(t)$ représente un paramètre pouvant dépendre du temps permettant de moduler l'intensité de cette interaction. Pour rendre le processus de conversion résonant, il suffit de moduler le paramètre $\varepsilon(t)$ avec une fréquence $\omega_p/2\pi$, $\varepsilon(t) = \varepsilon_0\exp(i\omega_p t)$, de sorte que :

[Math. 2]

$$\omega_p = \omega_q + \omega_w - \omega_b$$

soit satisfaite. Cette équation représente ce que l'on appelle le pompage paramétrique. Le premier terme du Hamiltonien ci-dessus correspond au processus décrit à l'étape 104, à savoir la destruction d'un photon dans le résonateur tampon accompagnée de l'excitation du qubit et de la création d'un photon dans le résonateur auxiliaire avec un taux :

[Math. 3]

$$\Gamma = \frac{4\varepsilon_0^2}{\kappa_w}.$$

Le second terme du Hamiltonien correspond au processus réciproque : la destruction d'un photon du résonateur auxiliaire et d'une excitation du qubit accompagnée de la création d'un photon dans le résonateur tampon. Ce second terme rend la détection inefficace car il supprime l'excitation du qubit qui sert de syndrome de détection et renvoie le photon incident dans sa ligne de transmission. Typiquement, c'est ce terme qui limite les détecteurs basés sur la conversion simple du résonateur vers le qubit et impose de moduler $\varepsilon_0(t)$ en fonction de l'instant d'arrivée et de la forme temporelle du photon incident.

Le procédé 100 selon la présente invention permet de se prémunir de ce processus réciproque. En effet, le photon créé dans le résonateur auxiliaire est dissipé immédiatement après sa création avec un taux $\kappa_W > \Gamma$. L'état du résonateur auxiliaire reste donc proche du vide. Le processus inverse qui nécessite la présence d'un photon dans le résonateur auxiliaire est ainsi largement inhibé. Le qubit reste alors dans son état excité après le passage d'une photon même si $\varepsilon_0$ est constant.

Le détecteur selon l'invention est considéré comme actif pendant toute la période où $\varepsilon_0 \neq 0$ et inactif, ou fermé, sinon.

Pour avoir une efficacité théorique du détecteur de 1, il faut que $\kappa_b = \Gamma$. D'après l'équation [Math. 3], pour être dans ce régime, il suffit de pomper le dispositif avec la bonne amplitude $\varepsilon_0$. Pour atteindre le régime $\kappa_b = \Gamma$, une optimisation des paramètres du dispositif peut être effectuée.

Le procédé 100 selon l'invention comprend une étape 106 de mesure, ou de lecture, du qubit. Une fois que l'état du qubit est représentatif de la présence ou non d'un photon incident, on mesure le qubit pour obtenir un signal de détection. L'étape 106 peut être effectuée soit après avoir fermé le détecteur, donc en absence de pompage, si le résonateur auxiliaire est utilisé comme système de lecture du qubit soit en parallèle avec les étapes précédentes sinon. Dans le premier cas, si le détecteur est actif plus longtemps que le temps de vie caractéristique de l'état excité du qubit, l'efficacité de détection commence à être limitée par ce dernier.

Pour que le procédé 100 et le dispositif selon l'invention fonctionnent, il est nécessaire que le qubit soit dans son état fondamental au début du procédé 100. Une étape 108 de réinitialisation du détecteur est effectuée pour qu'il soit prêt à recevoir un nouveau photon. Pour ce faire, le processus réciproque représenté par le second terme de $H_{int}$ est exploité. Ce processus a pour effet de détruire une excitation du qubit et un photon du résonateur auxiliaire pour créer un photon dans le résonateur tampon. Seulement, même si ce processus est rendu résonant par pompage paramétrique, il est interdit si le résonateur auxiliaire est vide. Pour rendre le processus possible et donc désexciter le qubit, il suffit donc d'exciter le résonateur auxiliaire avec une impulsion micro-onde. L'excitation du qubit et l'impulsion sur le résonateur auxiliaire vont donc être converties en un photon dans le résonateur tampon qui va se dissiper rapidement dans sa ligne de transmission. Le détecteur est alors prêt pour une nouvelle détection.

De manière alternative, il est également possible d'attendre que le qubit relaxe naturellement dans son état fondamental avant de procéder à une nouvelle détection. Cependant, le taux de conversion d'une réinitialisation active est bien plus grand que le taux de relaxation naturel du qubit, et l'on gagne donc sur le temps mort du détecteur. A titre d'exemple, le temps mort peut être de l'ordre de la microseconde alors qu'il serait de plusieurs dizaines de microsecondes sans réinitialisation active.

Si l'émission d'un photon par le port d'entrée du détecteur est nuisible à l'opération de la source de photons et que le dispositif comporte un résonateur de lecture spécifique, on pourra utiliser ce dernier pour évacuer le photon du processus de réinitialisation. Pour cela, on ajuste la fréquence de pompage pour faire en sorte que l'excitation du qubit et l'impulsion sur le résonateur auxiliaire soient converties en un photon du résonateur de lecture.

La Figure 2 est le circuit schématique d'un exemple de réalisation non limitatif d'un dispositif ou détecteur selon l'invention.

Le dispositif 1, représenté sur la Figure 2, comprend un premier résonateur 12, dit tampon, et à un deuxième résonateur 14, dit auxiliaire. Ces résonateurs sont des résonateurs micro-onde supraconducteurs et sont représentés par un condensateur agencé en parallèle avec une inductance.

Le résonateur tampon 12 est couplé capacitivement à une ligne de transmission 16 d'entrée dans laquelle arrive le photon incident 2. Le résonateur tampon 12 est couplé à la ligne de transmission 16 avec un taux $\kappa_b$. Cette bande passante peut-être accrue en augmentant la capacité de couplage. A titre d'exemple, $\kappa_b/2\pi$ peut être de l'ordre de 1 MHz.

Le résonateur auxiliaire 14 est couplé à une ligne de transmission 18 avec un taux $\kappa_W$. Il est requis que ce résonateur 14 soit fortement dissipatif, ce qui peut, par exemple, être réalisé par une fort couplage du résonateur à la ligne de transmission 18. A titre d'exemple, $\kappa_W/2\pi$ peut être de l'ordre de 3 MHz dans l'exemple de réalisation. Ce couplage important peut être obtenu grâce à une grande capacité de couplage 15. Le photon apparaissant dans le résonateur auxiliaire 14 au cours du processus de conversion décrit ci-dessus disparaît donc rapidement dans la ligne de transmission 18 sous la forme d'un photon 3.

Les deux résonateurs 12, 14 sont couplés capacitivement à un qubit supraconducteur de type transmon 10 (« transmon » étant une abréviation de l'expression anglaise *« transmission line shunted plasma oscillation qubit »*) représenté par un condensateur agencé en parallèle avec une jonction Josephson. Le nom transmon implique un régime particulier de paramètres pour le ratio entre l'énergie associée à la jonction $E_J$ et l'énergie du condensateur $E_C$ ($E_J/E_C \approx 50$) lui conférant des propriétés de cohérence importantes. Le transmon 10 sert de système quantique non-linéaire. On peut en isoler deux états, l'état fondamental et un état excité que l'on peut contrôler et détecter. Ces deux niveaux sont séparés en énergie d'une quantité $\hbar\omega_q$. Ce transmon 10 apporte également le terme d'interaction à trois ondes modulable nécessaire au fonctionnement du détecteur. Dans le cas du transmon 10 cette interaction s'écrit :

[Math. 4]

$$\hat{H}_{\mathrm{int}} = \hbar g_4 \alpha(t)\big(b q^\dagger w^\dagger + b^\dagger q w\big)$$

où $g_4$ est l'amplitude d'interaction à quatre ondes stationnaire propre au transmon 10 et $\alpha(t)$ représente l'onde supplémentaire correspondant au champs micro-onde de pompage paramétrique 4 d'amplitude $\alpha_0$ et de fréquence $\omega_{\mathrm{p}}$. Ce champ est acheminé par une ligne de transmission 20 faiblement couplée au transmon 10 pour éviter une dissipation superflue de ce dernier. De manière effective, on retrouve bien l'interaction à trois ondes modulable du cas général décrit ci-dessus avec $\varepsilon(t) = g_4\alpha(t)$. Pour ouvrir le détecteur 1, il suffit donc d'envoyer un champ de pompe, $\alpha_0 \neq 0$. Si cette pompe est éteinte, $\alpha_0 = 0$, le détecteur 1 est inactif ou fermé. Pour le transmon :

[Math. 5]

$$g_4 = \sqrt{\chi_b \chi_w},$$

avec $\chi_{\mathrm{b}}$, $\chi_{\mathrm{w}}$ les décalages dispersifs des résonateurs tampon et auxiliaire, respectivement. Ils indiquent le décalage des fréquences de résonance des résonateurs en présence d'une excitation du qubit 10. Dans l'exemple, ces valeurs sont de quelques MHz.

Dans le cas du dispositif 1 selon l'exemple de réalisation de la Figure 2, après avoir ouvert le détecteur 1 pendant une durée fixe, on peut procéder à la lecture du transmon (étape 106 du procédé 100 de la Figure 1). Cette lecture se fait selon une méthode standard de lecture dispersive où l'on exploite le fait que la fréquence du résonateur auxiliaire dépend de la présence ou non d'une excitation dans le transmon 10. Ce décalage dispersif en fréquence vaut typiquement $\chi_{\mathrm{w}}/2\pi = 3$ MHz. Il est ainsi possible de réaliser une mesure spectroscopique du résonateur auxiliaire 14 pour détecter ou non le décalage en fréquence et donc de déduire la présence ou l'absence d'une excitation du transmon 10. La mesure spectroscopique peut être mise en oeuvre en regardant la phase qu'acquiert une impulsion de lecture, ou signal de lecture, lorsqu'elle est réfléchie sur le résonateur auxiliaire 14. Cette impulsion, envoyée à la fréquence $\omega_{\mathrm{w}} - \chi_{\mathrm{w}}/2$ via la ligne de transmission 18, acquiert une phase dépendant de la fréquence du résonateur 14. La mesure de cette phase grâce à une série d'amplificateurs donne donc accès à la fréquence du résonateur auxiliaire 14 et ainsi à l'état du transmon 10.

Selon des modes de réalisation particulièrement avantageux, le dispositif de détection 1 selon l'invention peut comprendre des moyens de lecture supplémentaire, de filtrage et/ou d'accord de la fréquence de résonance du résonateur tampon.

La Figure 3 est une représentation de circuit d'un autre exemple de réalisation non limitatif d'un dispositif selon l'invention.

Dans ce mode de réalisation, représenté sur la Figure 3, le dispositif 1 comprend des composants supplémentaires par rapport au mode de réalisation décrit en référence à la Figure 1. La description des composants déjà décrits de la Figure 1 ne sera pas reproduite par la suite. Les composants supplémentaires incluent des moyens de filtrage et des moyens d'accord de fréquence.

Le mode de réalisation de la Figure 3 comporte un résonateur de lecture 13 supplémentaire couplé capacitivement au transmon 10. L'ajout de ce résonateur de lecture 13 supplémentaire permet d'effectuer la lecture du qubit (étape 106 du procédé) en parallèle avec le processus de conversion (étape 104 du procédé).

La lecture du qubit reste une lecture dispersive standard où un signal de lecture 5 est un ton continu qui circule dans la ligne de transmission 22 et est amplifiée grâce à une chaine d'amplification 30. En effet, contrairement aux approches basées sur l'interférométrie de Ramsey, les photons incidents affectent directement l'état d'énergie du qubit (et non la phase d'une superposition d'état). Ainsi, l'état du qubit 10 peut être surveillé en continu sans recourir aux différentes étapes de séparation et de recombinaison de l'interféromètre formé par les niveaux atomiques.

Un premier intérêt de pouvoir lire le transmon en continu est de s'affranchir des défauts d'efficacité liés au temps de vie fini de l'état excité du transmon. En effet, dans le dispositif selon le mode de réalisation de la Figure 2, le détecteur 1 est actif pendant une durée fixe. Même si le transmon 10 est excité au cours de cette période par un photon incident 2, la lecture qui a lieu plus tard peut le trouver dans son état fondamental à cause du temps de vie fini de l'état excité. Ceci entraine une diminution de l'efficacité du détecteur 1. Dans le dispositif selon le mode de réalisation de la Figure 3, la lecture en continu permet de s'affranchir de cette inefficacité car le qubit est mesuré en permanence et n'a donc pas le temps de relaxer.

Un second intérêt de la lecture continue est de détecter le photon en temps réel et donc de pouvoir associer une étiquette temporelle à chaque détection.

Enfin, contrairement aux approches selon l'état de l'art, une telle lecture continue permet de maintenir le détecteur actif sans aucun temps mort jusqu'à la détection d'un photon. En outre, un contrôleur en temps réel 32, indiqué sur la Figure 3, peut être utilisé pour réinitialiser le qubit dans son état fondamental selon l'étape 108 du procédé 100 selon l'invention sitôt que le qubit 10 est détecté dans l'état excité.

Selon le mode de réalisation représenté sur la Figure 3, les moyens de filtrage comprennent un filtre Purcell 17. Ce filtre consiste en un résonateur de fréquence $\omega_w$ inséré capacitivement entre le résonateur auxiliaire 14 et la ligne de transmission 18. Le filtre 17 permet encore au photon du résonateur auxiliaire 14 d'être dissipé dans la ligne de transmission 18, tout en limitant la dissipation de l'excitation du transmon 10 par la ligne de transmission 18.

Selon le mode de réalisation représenté sur la Figure 3, les moyens d'accord de fréquence comprennent un SQUID 11 introduit dans le résonateur tampon 12. Le SQUID 11 consiste en deux jonctions Josephson agencées en parallèle. En induisant un champ magnétique dans le SQUID, l'inductance du résonateur de tampon 12 peut être réglée, ce qui permet de faire varier la fréquence du résonateur de tampon 12. Pour induire le champ magnétique dans le SQUID 11, un courant est acheminé à proximité de ce dernier dans une ligne de flux rapide : une ligne de transmission court-circuitée à la masse par une boucle.

Pour la fabrication d'un dispositif selon l'invention, des techniques standard peuvent être mises en oeuvre.

Le dispositif 1 selon l'invention peut être fabriqué sur une plaque de silicium (Si) couverte d'une couche de niobium (Nb), sur laquelle le qubit 10 et les résonateurs 12, 14 sont réalisés par lithographie selon des méthodes connues. La plaque de Si peut avoir une épaisseur de quelques centaines de $\mu$m et la couche de Nb une épaisseur d'une centaine de nm. Les dimensions de la plaque de Si sont de quelques mm$^2$, par exemple $8 \times 8$ mm$^2$. Les longueurs des résonateurs sont choisies en fonction des fréquences souhaitées.

La jonction Josephson du transmon 10 peut être constitué d'aluminium (Al) et peut être ensuite ajoutée grâce à des techniques standards. Il peut d'agir d'une jonction de type Al-AlOx-Al (Ox signifiant oxydé), fabriquée grâce à la méthode du pont de Dolan. Cette méthode consiste en une double évaporation sous angle entrecoupée d'une oxydation contrôlée permettant d'obtenir une couche d'AlOx de quelques nm. La reprise de contact entre les électrodes d'aluminium de la jonction et le reste du circuit en Nb se fait par bombardement d'ions argon permettant de retirer la couche isolante de NbOx.

Bien sûr, l'invention n'est pas limitée aux exemples qui viennent d'être décrits et de nombreux aménagements peuvent être apportés à ces exemples sans sortir du cadre de l'invention qui est défini par les revendications.

## Revendications

1. Dispositif (1) de détection supraconducteur d'un photon micro-onde unique (2), le dispositif (1) comprenant :

   - un bit quantique supraconducteur (10) à deux niveaux énergétiques dont l'état fondamental et un état excité sont contrôlables et détectables, la transition entre les états fondamental et excité ayant une fréquence angulaire $\omega_q$,
   - un résonateur tampon (12) agencé pour recevoir un photon micro-onde unique incident (2) et ayant une fréquence angulaire $\omega_b$ ;
   - un résonateur auxiliaire (14) dissipatif agencé pour évacuer un photon (3) à un taux $\kappa_w$ et ayant une fréquence angulaire $\omega_w$ ; et
   - des moyens de lecture agencés pour détecter l'état du bit quantique (10) ;
   dans lequel le résonateur tampon (12) et le résonateur auxiliaire (14) sont des résonateurs micro-onde supraconducteurs et couplés au bit quantique supraconducteur (10) ;
   le bit quantique supraconducteur (10) étant adapté pour permettre une interaction modulable à trois ondes entre le résonateur tampon (12), le résonateur auxiliaire (14) et le bit quantique supraconducteur (10) ; et
   dans lequel l'état excité du bit quantique supraconducteur (10) et le photon du résonateur auxiliaire (14) sont créés avec un taux $\Gamma$, de sorte que $\Gamma < \kappa_w$, en réponse à la réception du photon incident dans le résonateur tampon (12) et à l'application d'un pompage paramétrique (4) au bit quantique supraconducteur (10), au résonateur tampon (12) ou au résonateur auxiliaire (14), le pompage paramétrique étant réalisé au moyen d'un champ micro-onde ayant une fréquence angulaire $\omega_p = \omega_q + \omega_w - \omega_b$.

2. Dispositif (1) selon la revendication 1, **caractérisé en ce que** la fréquence du photon incident est comprise entre 1 et 20 GHz.

3. Dispositif (1) selon la revendication 1 ou 2, **caractérisé en ce que** le bit quantique supraconducteur comprend un résonateur non-linéaire.

**4.** Dispositif (1) selon la revendication 3, **caractérisé en ce que** le bit quantique supraconducteur est de type transmon (10).

**5.** Dispositif (1) selon l'une quelconque des revendications précédentes, **caractérisé en ce que** les résonateurs (12, 14) sont couplés au bit quantique supraconducteur (10) de manière capacitive.

**6.** Dispositif (1) selon la revendication 1, **caractérisé en ce que** les moyens de lecture comprennent un résonateur micro-onde supraconducteur couplé capacitivement au bit quantique supraconducteur (10).

**7.** Dispositif (1) selon la revendication 6, **caractérisé en ce que** le résonateur est constitué par l'un des résonateurs suivants :

- le résonateur auxiliaire (14),
- un résonateur de lecture supplémentaire (13).

**8.** Dispositif (1) selon l'une quelconque des revendications précédentes, **caractérisé en ce qu'**il comprend en outre des moyens d'accord de fréquence de résonance du résonateur tampon (12).

**9.** Dispositif (1) selon la revendication 8, **caractérisé en ce que** les moyens d'accord de fréquence comprennent un SQUID (11).

**10.** Dispositif (1) selon l'une quelconque des revendications précédentes, **caractérisé en ce qu'**il comprend en outre des moyens de filtrage pour le résonateur auxiliaire (14).

**11.** Dispositif (1) selon la revendication 10, **caractérisé en ce que** les moyens de filtrage comprennent un filtre Purcell (17).

**12.** Procédé (100) de détection d'un photon unique micro-onde, mis en oeuvre au moyen d'un dispositif (1) de détection supraconducteur selon l'une quelconque des revendications 1 à 11, le procédé (100) comprenant les étapes suivantes :

- réception (102) d'un photon micro-onde unique incident (2) dans le résonateur tampon (12) ;
- conversion (104) du photon incident en une excitation du bit quantique supraconducteur (10) et un photon dans le résonateur auxiliaire (14) en réponse à la réception du photon incident dans le résonateur tampon (12) et à l'application d'un pompage paramétrique au bit quantique supraconducteur (10), au résonateur tampon (12) ou au résonateur auxiliaire (14), le pompage paramétrique étant réalisé au moyen d'un champ micro-onde ayant une fréquence angulaire $\omega_p = \omega_q + \omega_w - \omega_b$ ; et
- lecture (106) de l'état du bit quantique supraconducteur (10).

**13.** Procédé (100) selon la revendication 12, **caractérisé en ce qu'**il comprend en outre une étape de réinitialisation (108) du bit quantique supraconducteur (10) réalisée par l'application simultanée d'une impulsion de réinitialisation sur le résonateur auxiliaire (14) et du pompage paramétrique (4).

**14.** Procédé (100) selon la revendication 12 ou 13, **caractérisé en ce que** l'étape (106) de lecture est réalisée par l'application d'un signal de lecture au résonateur de lecture (13, 14).

**15.** Procédé (100) selon l'une quelconque des revendications 12 à 14, **caractérisé en ce que** l'étape (106) de lecture du mode du bit quantique supraconducteur (10) est réalisée au moyen du résonateur auxiliaire (14) en tant que résonateur de lecture.

**16.** Procédé (100) selon l'une quelconque des revendications 12 à 14, **caractérisé en ce que** l'étape (106) de lecture du mode du bit quantique supraconducteur (10) est réalisée au moyen d'un résonateur micro-onde supraconducteur de lecture supplémentaire (13) couplé au bit quantique (10).

**Patentansprüche**

**1.** Supraleitende Vorrichtung (1) zur Erfassung eines einzelnen Mikrowellenphotons (2), wobei die Vorrichtung (1) umfasst:

- ein supraleitendes Quantenbit (10) mit zwei Energieniveaus, wovon der Grundzustand und ein angeregter Zustand steuerbar und nachweisbar sind, wobei der Übergang zwischen dem Grundzustand und dem angeregten Zustand eine Kreisfrequenz $\omega_q$ hat,
- einen Pufferresonator (12), der so angeordnet ist, dass er ein einzelnes einfallendes Mikrowellenphoton (2) empfängt und eine Kreisfrequenz $\omega_b$ hat,
- einen dissipativen Hilfsresonator (14), der so angeordnet ist, dass er ein Photon (3) mit einer Rate $\kappa_w$ evakuiert und der eine Kreisfrequenz $\omega_w$ hat; und
- eine Leseeinrichtung, die so angeordnet ist, dass sie den Zustand des Quantenbits (10) erfasst;
wobei der Pufferresonator (12) und der Hilfsresonator (14) supraleitende Mikrowellenresonatoren sind und mit dem supraleitenden Quantenbit (10) gekoppelt sind;
wobei das supraleitende Quantenbit (10) so ausgelegt ist, dass es eine modulierbare Drei-Wellen-Wechselwirkung zwischen dem Pufferresonator (12), dem Hilfsresonator (14) und dem supraleitenden Quantenbit (10) ermöglicht; und
wobei der angeregte Zustand des supraleitenden Quantenbits (10) und das Photon des Hilfsresonators (14) mit einer Rate $\Gamma$ erzeugt werden, so dass $\Gamma < \kappa_w$, als Antwort auf den Empfang des einfallenden Photons in dem Pufferresonator (12) und auf das Anwenden eines parametrischen Pumpens (4) am supraleitenden Quantenbit (10), am Pufferresonator (12) oder am Hilfsresonator (14), wobei das parametrische Pumpen mittels eines Mikrowellenfeldes mit einer Kreisfrequenz $\omega_p = \omega_q + \omega_w - \omega_b$ durchgeführt wird.

2. Vorrichtung (1) nach Anspruch 1, **dadurch gekennzeichnet, dass** die Frequenz des einfallenden Photons zwischen 1 und 20 GHz liegt.

3. Vorrichtung (1) nach Anspruch 1 oder 2, **dadurch gekennzeichnet, dass** das supraleitende Quantenbit einen nichtlinearen Resonator umfasst.

4. Vorrichtung (1) nach Anspruch 3, **dadurch gekennzeichnet, dass** das supraleitende Quantenbit vom Typ Transmon (10) ist.

5. Vorrichtung (1) nach einem der vorhergehenden Ansprüche, **dadurch gekennzeichnet, dass** die Resonatoren (12, 14) kapazitiv an das supraleitende Quantenbit (10) gekoppelt sind.

6. Vorrichtung (1) nach Anspruch 1, **dadurch gekennzeichnet, dass** die Leseeinrichtung einen supraleitenden Mikrowellenresonator umfasst, der kapazitiv mit dem supraleitenden Quantenbit (10) gekoppelt ist.

7. Vorrichtung (1) nach Anspruch 6, **dadurch gekennzeichnet, dass** der Resonator aus einem der folgenden Resonatoren besteht:

- dem Hilfsresonator (14),
- einem zusätzlichen Leseresonator (13).

8. Vorrichtung (1) nach einem der vorhergehenden Ansprüche, **dadurch gekennzeichnet, dass** sie außerdem Mittel zur Abstimmung der Resonanzfrequenz des Pufferresonators (12) umfasst.

9. Vorrichtung (1) nach Anspruch 8, **dadurch gekennzeichnet, dass** die Mittel zur Frequenzabstimmung einen SQUID (11) umfassen.

10. Vorrichtung (1) nach einem der vorhergehenden Ansprüche, **dadurch gekennzeichnet, dass** sie außerdem Filtermittel für den Hilfsresonator (14) umfasst.

11. Vorrichtung (1) nach Anspruch 10, **dadurch gekennzeichnet, dass** die Filtermittel einen Purcell-Filter (17) umfassen.

12. Verfahren (100) zum Erfassen eines einzelnen Mikrowellenphotons, das mittels einer supraleitenden Erfassungsvorrichtung (1) nach einem der Ansprüche 1 bis 11 durchgeführt wird, wobei das Verfahren (100) die folgenden Schritte umfasst:

- Empfangen (102) eines einzelnen einfallenden Mikrowellenphotons (2) in dem Pufferresonator (12);
- Umwandeln (104) des einfallenden Photons in eine Anregung des supraleitenden Quantenbits (10) und ein Photon in dem Hilfsresonator (14) als Antwort auf den Empfang des einfallenden Photons in dem Pufferresonator (12) und auf das Anwenden eines parametrischen Pumpens am supraleitenden Quantenbit (10), am Pufferresonator (12) oder am Hilfsresonator (14), wobei das parametrische Pumpen mittels eines Mikrowellenfeldes mit einer Kreisfrequenz $\omega_p = \omega_q + \omega_w - \omega_b$ durchgeführt wird; und
- Lesen (106) des Zustands des supraleitenden Quantenbits (10).

13. Verfahren (100) nach Anspruch 12, **dadurch gekennzeichnet, dass** es außerdem einen Schritt zum Zurücksetzen (108) des supraleitenden Quantenbits (10) umfasst, der durch das gleichzeitige Anwenden eines Rücksetzimpulses an den Hilfsresonator (14) und des parametrischen Pumpens (4) durchgeführt wird.

14. Verfahren (100) nach Anspruch 12 oder 13, **dadurch gekennzeichnet, dass** der Schritt (106) des Lesens durch Anwenden eines Lesesignals an den Leseresonator (13, 14) durchgeführt wird.

15. Verfahren (100) nach einem der Ansprüche 12 bis 14, **dadurch gekennzeichnet, dass** der Schritt (106) des Lesens des Modes des supraleitenden Quantenbits (10) mittels des Hilfsresonators (14) als Leseresonator durchgeführt wird.

16. Verfahren (100) nach einem der Ansprüche 12 bis 14, **dadurch gekennzeichnet, dass** der Schritt (106) des Lesens des Modes des supraleitenden Quantenbits (10) mittels eines zusätzlichen supraleitenden Mikrowellenleseresonators (13), der mit dem Quantenbit (10) gekoppelt ist, durchgeführt wird.

**Claims**

1. Superconducting device (1) for detection of a single microwave photon (2), the device (1) comprising:

   - a superconducting quantum bit (10) with two energy levels, of which the ground state and an excited state are controllable and detectable, the transition between the ground and exited state having an angular frequency $\omega_q$,
   - a buffer resonator (12) arranged to receive an incident single microwave photon (2) and having an angular frequency $\omega_b$;
   - a dissipative auxiliary resonator (14) arranged to discharge a photon (3) at a rate $\kappa_w$ and having an angular frequency $\omega_w$; and
   - readout means arranged for detecting the state of the quantum bit (10);

   wherein the buffer resonator (12) and the auxiliary resonator (14) are superconducting microwave resonators and coupled to the superconducting quantum bit (10);
   the superconducting quantum bit (10) being suitable for allowing a modulable threewave interaction between the buffer resonator (12), the auxiliary resonator (14), and the superconducting quantum bit (10); and
   wherein the excited state of the superconducting quantum bit (10) and the photon of the auxiliary resonator (14) are created at a rate $\Gamma$, such that $\Gamma < \kappa_w$, in response to the reception of the incident photon in the buffer resonator (12) and to the application of parametric pumping (4) to the superconducting quantum bit (10), the parametric pumping being carried out by means of a microwave field having an angular frequency $\omega_p = \omega_q + \omega_w - \omega_b$.

2. Device (1) according to claim 1, **characterized in that** the frequency of the incident photon is comprised between 1 and 20 GHz.

3. Device (1) according to claim 1 or 2, **characterized in that** the superconducting quantum bit comprises a non-linear resonator.

4. Device (1) according to claim 3, **characterized in that** the superconducting quantum bit is of the transmon type (10).

5. Device (1) according to any one of the preceding claims, **characterized in that** the resonators (12, 14) are capacitively coupled to the superconducting quantum bit (10).

6. Device (1) according to claim 1, **characterized in that** the readout means comprise a superconducting microwave resonator capacitively coupled to the superconducting quantum bit (10).

7. Device (1) according to claim 6, **characterized in that** the resonator is constituted by one of the following resonators:

- the auxiliary resonator (14);
- a supplementary readout resonator (13).

8. Device (1) according to any one of the preceding claims, **characterized in that** it also comprises resonance frequency tuning means of the buffer resonator (12).

9. Device (1) according to claim 8, **characterized in that** the frequency tuning means comprise a SQUID (11).

10. Device (1) according to any one of the preceding claims, **characterized in that** it also comprises filter means for the auxiliary resonator (14).

11. Device (1) according to claim 10, **characterized in that** the filter means comprise a Purcell filter (17).

12. Method (100) for detecting a single microwave photon, implemented by means of a superconducting detection device (1) according to any one of claims 1 to 11, the method (100) comprising the following steps:

- receiving (102) an incident single microwave photon (2) in the buffer resonator (12);
- converting (104) the incident photon to an excitation of the superconducting quantum bit (10) and a photon in the auxiliary resonator (14) in response to the reception of the incident photon in the buffer resonator (12) and to the application of a parametric pumping to the superconducting quantum bit (10), the buffer resonator (12), and the auxiliary resonator (14), the parametric pumping being realized by means of a microwave field having an angular frequency $\omega_p = \omega_q + \omega_w - \omega_b$; and
- readout (106) of the state of the superconducting quantum bit (10).

13. Method (100) according to claim 12, **characterized in that** it also comprises a step of resetting (108) the superconducting quantum bit (10) carried out by simultaneous application of a reset pulse on the auxiliary resonator (14) and of the parametric pumping (4).

14. Method (100) according to claim 12 or 13, **characterized in that** the readout step (106) is carried out by application of a readout signal to the readout resonator (13, 14).

15. Method (100) according to any one of claims 12 to 14, **characterized in that** the readout step (106) of the mode of the superconducting quantum bit (10) is carried out by means of the auxiliary resonator (14) as readout resonator.

16. Method (100) according to any one of claims 12 to 14, **characterized in that** the readout step (106) of the mode of the superconducting quantum bit (10) is carried out by means of a supplementary superconducting microwave readout resonator (13) coupled to the quantum bit (10).

100

Réception d'un photon micro-
onde dans un résonateur tampon — 102

Conversion du photon en une
excitation du système quantique et un
photon du résonateur auxiliaire — 104

Mesure de l'état du système
quantique — 106

Réinitialisation — 108

Fig. 1

Fig. 2

Fig. 3

## RÉFÉRENCES CITÉES DANS LA DESCRIPTION

**Littérature non-brevet citée dans la description**

- **LEGHTAS et al.** Confining the state of light to a quantum manifold by engineered two-photon loss. *arXiv:1412.4633v1,* 2014

- **BESSE et al.** Single-shot quantum non-demolition détection of itinérant microwave photons. *arXiv:1711.11569v1,* 2017